# EUROPEAN PATENT SPECIFICATION

(11) **EP 1 539 561 B1**
(45) Date of publication and mention of the grant of the patent: **04.07.2007**
(21) Application number: 04715942.1
(22) Date of filing: 01.03.2004
(51) Int. Cl.: B62D 13/02, B62D 13/04, B60D 1/00

(54) **IMPROVEMENTS IN AND RELATING TO TRAILER COUPLING**
VERBESSERUNGEN BEI UND IM ZUSAMMENHANG MIT ANHÄNGERKUPPLUNGEN
AMELIORATIONS APPORTEES A UN DISPOSITIF D'ATTELAGE DE REMORQUE ET RELATIVES A UN TEL DISPOSITIF

(30) Priority: 15.03.2003 GB 0305992
(43) Date of publication of application: 15.06.2005
(73) Proprietor: Haslam, James Henry, Fulwood, Preston PR2 9AZ (GB)
(72) Inventor: Haslam, James Henry, Fulwood, Preston PR2 9AZ (GB)
(74) Representative: Brandon, Paul Laurence
(86) International application number: PCT/GB2004/000853
(87) International publication number: WO 2004/083019

(56) References cited:
- DE-A- 1 932 268
- FR-A- 979 854
- FR-A- 1 229 355
- US-A- 1 668 079
- US-A- 5 037 121
- US-A- 5 364 117
- US-A- 6 158 759

## Description

### Field of the Invention

This invention relates to a trailer coupling apparatus such as defined in the preamble of claim 1 and known for example from US5037121.

### Background to the Invention

It is known to provide a towing vehicle to which is connected a trailer such as a goods wagon or flat-back wagon, and in which the trailer is pivotably connected to the towing vehicle. The pivotable connection is needed in order to ensure that when the towing vehicle is steered to the left or right, the trailer may also move correspondingly to the left or the right in order to prevent undue stress on the wheels and/or axles of the trailing vehicle, and to facilitate smooth and safe turning of towing vehicle and trailer.

There are various different types of trailers which may be coupled to towing vehicles. In particular, lorry chassis generally have a pivot point into which a pivot bar of a lorry trailer may be inserted, and about which the lorry trailer may pivot upon turning of the lorry chassis. The trailer may include a central axle or axles, such that the trailing vehicle is finely balanced on the central axle(s) when connected to the towing vehicle. This particular configuration allows good turning characteristics of the towing vehicle and trailer, both in forward and reverse directions, but is relatively unstable in that any goods contained within the trailer must be finely balance in order that the trailer does not overbalance towards the front or rear of the trailer, and thus create instability in the towing vehicle-trailer coupling and the driving characteristics of the towing vehicle.

A second type of trailer provides front and rear axles on the trailer, such that the trailer is adequately balanced whatever the orientation of the goods are lowered within the trailer. This type of trailer may include a tow bar in the form of in the form of an "A-frame", and connected to the front of the trailer and which, at the apex of the "A" comprises either a towing pin or a towing aperture, which pivotably connects with a corresponding towing aperture or towing pin on the towing vehicle. The front axle of this type of trailer generally comprises a turntable on which the axle is mounted, such that the front axle may freely pivot with the turntable, as the lorry chassis, or any other towing vehicle turns. The system is adequate for forward movement and steering of the towing vehicle, but problems can arise when it is desired to reverse the vehicle and trailer, such as in order to reverse into a goods yard or the like for example.

As the turntable with which the axle rotates is freely rotatable, when a towing vehicle reverses and steers left or right at the same time, the trailer has a tendency to overcompensate in pivoting about the pivotable connection between the trailer and the towing vehicle, such that the wheels connected to the turntable on the trailer effect "jack-knifing" or folding up of the trailer towards the towing vehicle. Obviously, this can be dangerous and may cause unnecessary damage to the towing vehicle and/or trailer.

US 5,037,121 (Gallatin) describes a linked articulation (LA) system for the connection of a leading trailer to a following trailer, in which the system constrains the front of the following trailer to a position close to an imaginary extension of the leading trailer centreline. The constraining means comprise a bar, insertable into an aperture which enables the bar to steer the second (following) trailer.

It would therefore be advantageous to provide a trailer coupling apparatus which enables a trailer to be pivotably connected to a towing vehicle, and which enables effective and safe forward and reverse steering of the towing vehicle.

It would also be advantageous to provide a trailer coupling apparatus which enabled at least one set of left and right wheels on a trailing vehicle to be oriented in a substantially optimal direction with respect to the orientation of the towing vehicle, when, in use the towing vehicle is steered left or right.

It is therefore an aim of preferred embodiments of the invention to overcome or mitigate at least one problem of the prior art, whether expressly disclosed herein or not.

### Summary of the Invention

According to a first aspect of the invention there is provided a trailer coupling apparatus comprising means to pivotably mount at least one left wheel and at least one right wheel to a trailer, independent means to pivotably connect the trailer to a towing vehicle and means to enable differential pivoting of the said trailer wheels and trailer, with respect to the towing vehicle, as the towing vehicle is turned in use, comprising restriction means, arranged in use to reduce the magnitude of pivoting of the wheels with respect to the trailer upon turning of an attached towing vehicle compared to the magnitude of pivoting of the wheels with respect to the trailer when no restriction means are present, characterised in that the restriction means comprises a steering bar having a proximal end connected to the means to pivotably mount the wheels of the trailer coupling apparatus, and a distal end, the steering bar further comprising a connection ball protruding laterally at, or in the region of the distal end, the restriction means further comprising a channel member, arranged in use to be mounted on a towing vehicle parallel with or at an incline with respect to the chassis of the towing vehicle and trailer, and wherein the connection ball is arranged in use to be movably mounted within the channel member of the restriction means.

By "trailer" we mean any wheeled vehicle or wheeled apparatus which may be towed by a vehicle, such as a goods trailer, flat-back trailer, caravan, electrical generator and the like, for example. Particularly suitable as a trailer is a goods trailer.
Preferably the trailer coupling apparatus further comprises the at least one left wheel and at least one right wheel.

Preferably the trailer comprises a trailer chassis to which is mounted a rear set of preferably fixed wheels and the coupling apparatus preferably comprises a front set of wheels which can be pivotably mounted to the trailer.

The pivotable wheels of the apparatus may be connectable to an axle which is mounted on a pivotable member, such as a turntable. The axle may be positioned towards the centre of the turntable, but is preferably positioned towards the rear of the turntable, with respect the direction of the trailer to which it is mounted. The axle and/or turntable may comprise part of the trailer or part of the coupling apparatus.

Alternatively the pivotable wheels may be connected to pivotable kingpins, said kingpins being preferably connectable to the chassis or a sub-frame of the trailer.

The pivotable connection means may comprise a suspension means, and/or means to bias the connection means onto the towing vehicle, in use.

Preferably the means to pivotably connect the trailer to a towing vehicle comprises a tow bar.

Preferably the tow bar comprises a female or male member at the distal end thereof, arranged in use to cooperate with a corresponding male or female member on the towing vehicle.
The tow bar may comprise an A-frame, wherein suitably the apex of the frame comprises the male or female member.

The tow bar may comprise means to prevent the distal end of the tow bar from falling to ground level when it is not coupled to a towing vehicle, and may comprise biasing means, arranged to bias the distal end of the tow bar away from the ground. The biasing means which prevent the distal end of the tow bar from falling to ground level may be the same biasing means arranged to bias the connection means onto a towing vehicle, in use, for example when the tow bar is arranged to connect to the underside of the towing vehicle. The biasing means may comprise any suitable means, such as a spring for example.

The pivotable wheels are preferably arranged to pivot in the turning direction of the towing vehicle, in use. Thus the pivotable wheels preferably pivot into the turn made by the towing vehicle in use.

The restriction means may effect restriction of pivoting of the pivotable wheels of the trailer to a fraction of the angle effected between the trailer and a towing vehicle chassis upon turning/pivoting of a towing vehicle to which the trailer is connected, in use, until the towing vehicle has turned a prescribed angle.

Suitably the restriction means enables movement of the pivotable wheels of the trailer in the direction a towing vehicles turns, in use, and effects a restricted angle of turning of the pivotable wheels in relation to the turning arc of the towing vehicle.

Preferably the restriction means comprise means to enable substantially optimal orientation of the pivotable wheels of the trailer, in relation to the orientation of the towing vehicle, in use, as the towing vehicle is turned.

Suitably the restriction means effects restriction of pivoting of the wheels to an angle of no more than 85%, preferably no more than 75%, more preferably no more than 65% and most preferably no more than 60% of the angle turned by the towing vehicle. Suitably the restriction means effects restriction of pivoting of the wheels to an arc of no more than 90°, preferably no more than 85°, more preferably no more that 80° and most preferably no more than 75°.

As the pivotable wheels are restricted to pivoting in a defined smaller arc with respect to the trailer during reversing of a towing vehicle and the trailer, the pivotable wheels cannot pivot past the angle formed between the towing vehicle and trailer in relation to the direction of the trailer and thus, the wheels are prevented from pivoting such that the trailer turns in on the towing vehicle or jack-knifes. Thus the restriction means may enable safer reversing as compared to towed trailers not utilising the trailer coupling apparatus of the invention.

Utilising a steering bar mounted in a channel has the effect of enabling translation of at least part of the rotational movement between the towing vehicle and trailer into linear movement of the steering bar in the channel and thus the angle between the towing vehicle and trailer will be the prescribed angle greater than the angle of the pivotable wheels relative to the trailer front.

The channel member preferably comprises an open end and a closed end.

Preferably the open end is operably cooperable with the steering bar to enable movement between the steering bar and the channel member.

Suitably the closed end is arranged, in use to restrict movement of the steering bar to within the channel member.

The steering bar may be connected to the pivotable wheels and the channel member may be connectable to the towing vehicle, in use. Alternatively the channel member may be connected to the pivotable wheels and the steering bar connectable to the towing vehicle, in use.

The connection ball may comprise a substantially spherical member and the channel member may comprise a channel of substantially cylindrical cross-section. The channel member preferably comprises means to prevent removal of the steering bar from the channel member other than by way of the open end. The channel member may comprise releasable securement means, arranged to releasably secure the steering bar within the channel member until it is desired to release it.

The restriction means may comprise a telescopic member. Thus the pivoting of the pivotable wheels in relation to turning of the towing vehicle, in use, will be determined by the minimum or maximum length of the telescopic member.

The means to pivotably connect the trailer to a towing vehicle may also comprise a telescopic tow bar. Thus, utilisation of a telescopic tow bar enables the trailer coupling apparatus to be connected to a plurality of different trailer-towing vehicle combinations which require different minimum or maximum coupling distances, or space between the trailer and towing vehicle.

The apparatus may comprise secondary restriction means, which in use, are connectable to the trailer and which restrict upward and downward movement of the pivotable wheels during turning of the trailer.

The secondary restriction means may comprise one or more buffers co-operable with each pivotable wheel and which are arranged to protrude towards the ground from the trailer adjacent to the trailer's front wheel axle or axles. There may be a buffer arranged to be located in front of the or each axis and behind the or each axle. The buffer or buffers may be constructed from any suitable material, such as rubber, for example.

Thus at high speeds when the front axle or axles are parallel with the direction of travel, the axle(s) may move up and down with the suspension freely. At lower speeds, if the front axle or axles pivot during turning of the trailer, part of the or each axle will move underneath the or each buffer and be prevented from moving fully upwards towards the underside of the trailer by the buffer(s).

According to a second aspect of the invention there is provided a trailer comprising at least one pivotable front left and right wheels, and trailer coupling apparatus of the first aspect of the invention.

Suitably the trailer comprises a rear set of wheels in addition to the front set of wheels. The rear set of wheels are preferably a fixed non-pivotable set of wheels.

Suitably the pivotable wheels are mounted to a turntable located beneath the trailer. The turntable is preferably as described for the first aspect of the invention.

Preferably the means to independently pivotably connect the trailer to a towing vehicle and means to enable differential pivoting of the trailer wheels and trailer are as described for the first aspect of the invention.

According to a third aspect of the invention there is provided a method of connecting a trailer to a towing vehicle, comprising the steps of:
(a) providing a trailer, towing vehicle and a trailer coupling apparatus of the first aspect of the invention;
(b) connecting the trailer coupling apparatus to the trailer; and
(c) coupling the trailer to the towing vehicle via the trailer coupling apparatus.

Steps (a), (b) and (c) may be performed in any suitable order.

The means to pivotably mount the wheels to the trailer, means to pivotably connect the trailer to a towing vehicle The means to pivotably mount the wheels to the trailer, means to pivotably connect the trailer to a towing vehicle and means to differentially pivot the trailer wheels and trailer are preferably as described for the apparatus and trailer of the first and second aspects of the invention.

### Brief Description of the Drawings

For a better understanding of the invention and to show how embodiments of the same may be put into effect, the various aspects will now be described by way of example only, with reference to the accompanying drawings, in which:
Figure 1 illustrates a first embodiment of a trailer coupling apparatus of the invention, in plan view, connected to a trailer and a towing vehicle;
Figure 1A illustrates a side view of the trailer coupling apparatus of Figure 1;
Figure 1B illustrates an end cross sectional views of the parts of the restriction member of the trailer coupling apparatus of Figures 1 and 1A;
Figures 2A to 2C illustrates plan schematic views of movement of a trailer and pivotable wheels when coupled to a towing vehicle using the trailer coupling apparatus of the invention;
Figure 3 illustrates a third embodiment of a trailer coupling apparatus of the invention coupled to a trailer;
Figure 4A illustrates a side cross sectional view of a second restriction means of a trailer coupling apparatus of the invention;
Figure 4B illustrates a plan cut away sectional view of the secondary restriction means shown in Figure 5A, connected to a flat-back trailer;
Figure 4C illustrates a side view of the secondary restriction means shown in Figures 4A and 4B;
Figure 4D illustrates a plan view of part of the secondary restriction means shown in Figures 4A and 4B;
Figure 4E illustrates a plan view of the flat-back trailer shown in Figures 4A and 4B, in which pivotable wheels have been pivoted beneath the trailer;
Figure 4F illustrates a side sectional view of the flat-back trailer of Figures 4A, 4B and 4E in which the pivoted axle of the pivotable wheels is restricted by the secondary restriction means of the apparatus of the invention;
Figure 5 illustrates a third embodiment of a trailer coupling apparatus of the invention in plan view, connected to a trailer and a towing vehicle;
Figure 6 illustrates an embodiment of a towing bar usable in the trailer coupling apparatus of the invention connected to a towing vehicle;
Figure 7 illustrates a plan view of a fifth embodiment of the trailer coupling apparatus of the invention, coupled to a trailer and a towing vehicle;
Figure 7A illustrates a side view of the trailer coupling apparatus shown in Figure 8; and
Figure 8 illustrates a plan schematic view of the trailer coupling apparatus of Figures 7 and 7A, coupled to a trailer and towing vehicle, wherein the trailer and towing vehicle are pivoted relative to one another about the trailer coupling apparatus.

### Description of the Preferred Embodiments

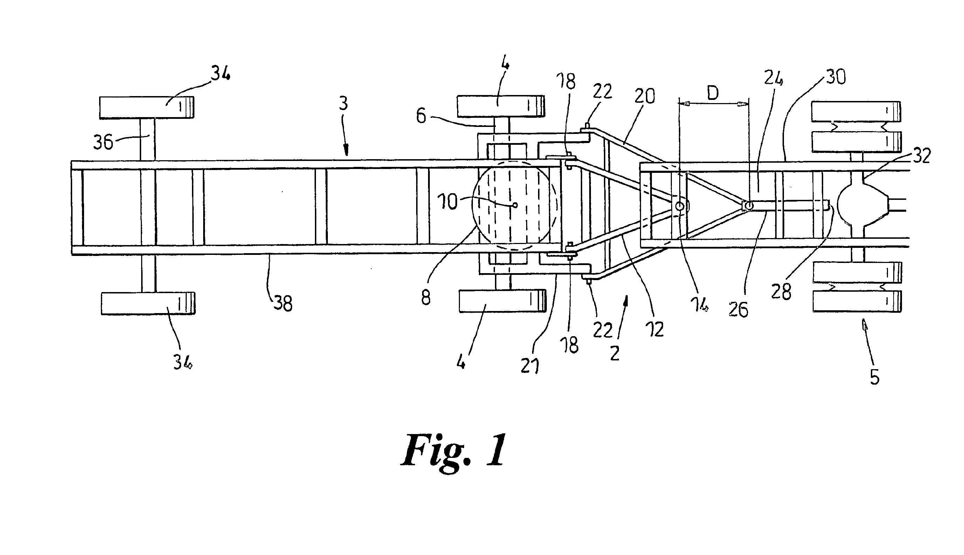

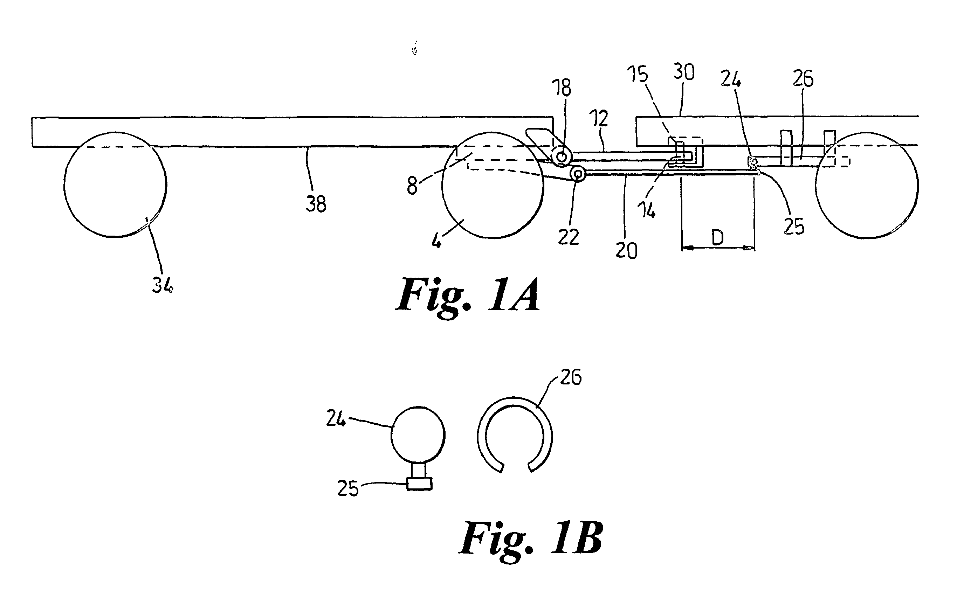

We refer firstly to Figures 1, 1A and 1B, which illustrate a first embodiment of a trailer coupling apparatus 2 of the invention. The trailer coupling apparatus comprises means to pivotably mount front left and right wheels on a trailer chassis 38, in the form of a turn table 8, on which is mounted a fixed axle 6 at either end of which are mounted the wheels 4. The turntable 8 is mounted on a single pivot point 10 connectable to the chassis 38 of the trailer. The trailer coupling apparatus 2 further comprises means to pivotably connect the trailer to a towing vehicle 5, in the form of an "A-frame" tow bar 12, which at the distal end of the legs of the "A" are connected to the trailer chassis 38 via hinges 18. The apex of the A-frame 12 is connectable to the towing vehicle 5 by way of a pivot aperture 14 operably connectable to a pivot bar on the towing vehicle 5, located at or towards the rear of the towing vehicle 5 chassis 30. The trailer coupling apparatus 2 further comprises means to effect differential pivoting of the trailer wheels 4 and trailer 3 as the towing vehicle is turned in use, in the form of an A-frame steering bar 20, connected to a steering frame 21, which is in turn connected to the pivotable turntable 8 of the coupling apparatus 2. The A-frame steering bar 20 is connected to the steering frame 21 via hinges 22 located at the distal ends of the legs of the "A" at the apex 25 of the "A" frame 20 is located a connection ball 24 which is substantially spherical. Also comprising part of the means to enable differential pivoting is a slide channel 26 comprising a substantially cylindrical hollow cross section having an open channel there along. The slide channel 26 includes at its distal end thereof a closed channel end 28. The ball within the slide channel 26 is dimensioned to allow insertion of the connection ball 24 of the A-frame steering bar 20, such that the connection ball 24 may slide along the slide channel 26 up to the closed end 28. The trailer coupling apparatus 2 is connected such that the turntable 8 is connected to the chassis 38 of the trailer 3 at the front end thereof. The trailer 3 also comprises at its rear end a fixed rear axle 36 on which are mounted rear left and right wheels 34. The slide channel 26 is connected to the rear of the chassis 30 on a towing vehicle 5, such that the open end thereof faces the rear of the towing vehicle 5. The slide channel 26 is connected just behind the rear axle 32 of the towing vehicle.

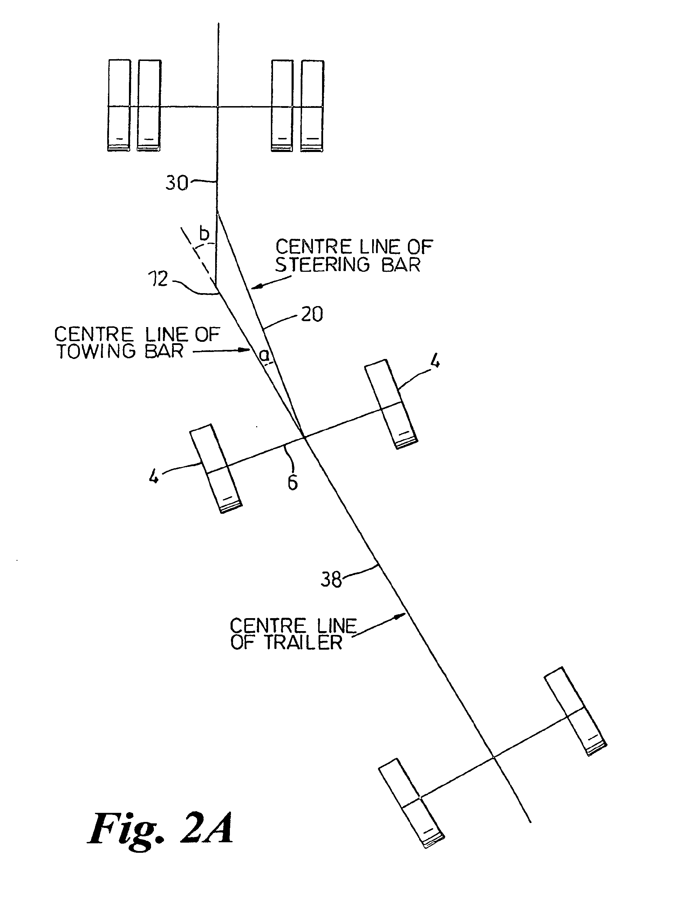

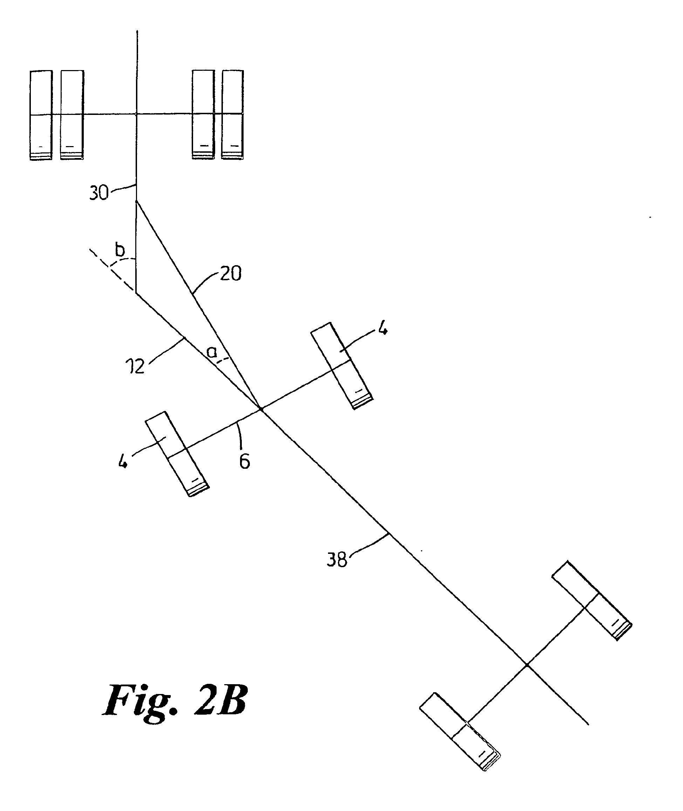

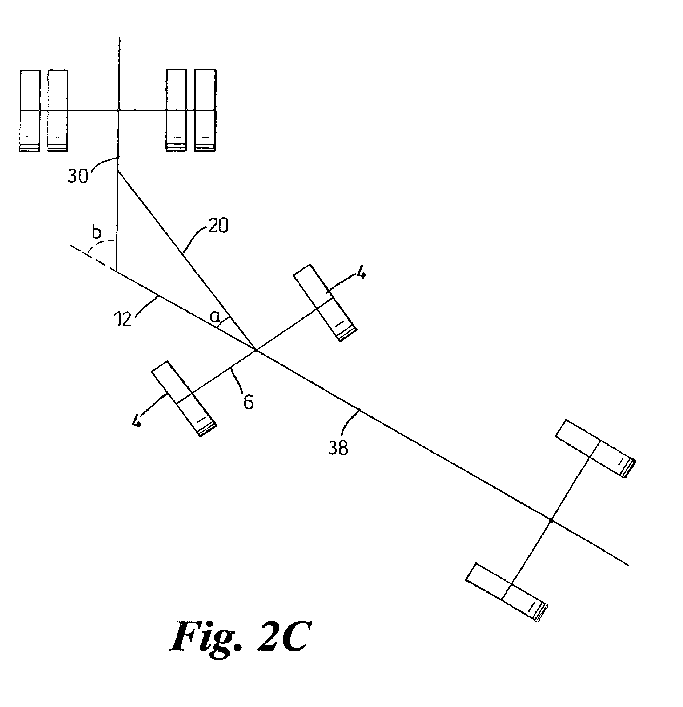

Use of the trailer coupling apparatus 2 of Figure 1 will now described with reference to Figures 1, 1A, 1B and Figures 2A to 2C. The slide channel 26 is firstly connected to the underside of the rear of a chassis 30 of a towing vehicle, by a suitable means. Alternatively, the slide channel 26 may be integral with the chassis 30 in new vehicles. The steering frame 21 is connected to the underside of the front of a trailer 3 such that the turntable 8 is pivotably connected under the chassis 38, and thus the front left and right wheels 4 are pviotably mounted on the chassis 38. The tow bar 12 of the apparatus 2 is then connected to the chassis 30 of the towing vehicle 5 by way of the towing aperture 14 of the tow bar 12 being connected to the towing pin 15 connected to or integral with the chassis 30 of the towing vehicle. As the tow bar 12 is hingedly connected on hinges 18, if the towing vehicle 5 and trailer 3 move over uneven ground, the difference in heights between the towing vehicle 5 and trailer 3 are compensated by pivoting of the tow bar 12 at the hinges 18. The steering bar 20 is then connected to the slide channel 26 on the chassis 30 of the towing vehicle 5 by manipulation of the steering ball 24 into the ball of the slide channel 26, by reversing the towing vehicle towards the steering ball 24 and manipulating the steering ball 24 by any suitable means. The slide channel 26 also includes a tow bar release prevention means (not shown) which can be connected around the open end of the slide channel 26 such that when the tow bar is within the bore of the channel 26, it can not be removed from the open end until the release means are activated. Any suitable release prevention means may be utilised as are known to automotive engineers.

Thus, the trailer coupling apparatus 2 is connected to both the trailer 3 and the towing vehicle 5 in order to couple the two together.

As the slide channel 26 has a finite length, the steering ball 24 may move slidably, forward and reverse along the finite length during movement of the trailer 3 and towing vehicle 5 during driving.

When the towing vehicle 5 travels in a straight line, the ball 24 will be drawn back to the rear open end of the slide channel 26 (but prevented from leaving the open end by the release means (not shown)), and by the limited rear movement available due to the specific connection between the tow bar 12 and pivot bar 15. As the towing vehicle 5 is turned to the right during driving (the following description is equally applicable to turning to the left, but for clarity only turning to the right will be described), the towing vehicle 5 is pivoted relative to the trailer about the pivot aperture 14 and pivot bar 15 connecting the trailer 3 to the towing vehicle 5, to form an angle b as shown in Figures 2A to 2C. The further the vehicle turns, the greater angle b becomes and the greater the angular difference between the centre line of the towing bar and trailer chassis to the direction of the towing vehicle chassis and wheels. As the towing vehicle 5 turns further to the right, the chassis 30 of the towing vehicle 5 becomes offset with respect to the steering bar, thus translating the rotational movement to linear movement in urging the steering ball 24 to move linearly forward within the slide channel 26 towards the closed end 28. As the steering ball 24 is able to slide along the channel 26, the pivotable wheels 4 are restricted to a lesser magnitude of pivoting by the concurrent linear movement of the ball 24 (and hence steering bar 20). Therefore the wheels 4 will always be restricted to a smaller pivotable angle with respect to the towing vehicle. Eventually, the steering ball 24 will substantially abut the closed end 28 of the slide channel 26, and thus be restricted from moving any further.

Figures 2A to 2C illustrate the relative differential angles of the pivotable wheels 4 and steering bar 20 of the coupling means 2 with respect to the direction of the towing vehicle chassis 30 during a right turn of said towing vehicle 5, compared to the differential angle obtained between the centre line of the towing bar 12 as compared to the chassis 30 of the towing vehicle 5 during the same turn. It can be seen that during a right turn, the pivotable front wheels 4 having been reduced in pivoting are then always at a reduced angle in relation to the towing vehicle 5 as compared to the angle between the chassis 38 of the trailer 3 and the towing vehicle 5. Thus, for reversing the towing vehicle 5, the restriction of movement prevents the pivotable wheels 4 from over pivoting such that the trailer body and trailer chassis 38 of the trailer 3 fold in or jack knife. The trailer coupling apparatus 2 serves to facilitate safe and efficient turning, and especially reverse turning of a trailer coupled to a towing vehicle.

The steering bar 20 is also biased upwardly by a resilient biasing means such as spring (not shown), in order that when the towing vehicle 5 is uncoupled from the trailer 3, the steering bar 20 is urged away from the ground level. The resilient biasing means also helps to facilitate connection of the steering bar 20 with the slide channel 26 during connection and disconnection. The slide tube may also be funnel shaped towards the open end thereof to assist coupling of the steering ball 24 and the bore of the slide channel 26.

The distance D shown on Figure 1, between the tow bar 12 connection with the chassis 30 of the towing vehicle 5 and the steering ball 24 connection with the slide channel 26 at its rear most open end, can be increased or decreased, to obtain different steering characteristics, under steer or over steer etc between the towing vehicle and trailer during turning of the towing vehicle. The slide tube 26 may also be connected at an incline with respect to the chassis 30 of the towing vehicle 5 in order to change the steering characteristics.

The axle 6 mounted on the turntable 8 of the coupling apparatus 2 is towards the rear of the turntable, facilitating the steering to self centre during forward linear motion of the towing vehicle 5 and trailer 3, and also has the advantage that when the vehicle turns to the left or right, the axle moves to the left or right respectively giving greater stability to the trailer 3. The axle 6 could however be positioned across the centre of the turntable 8.

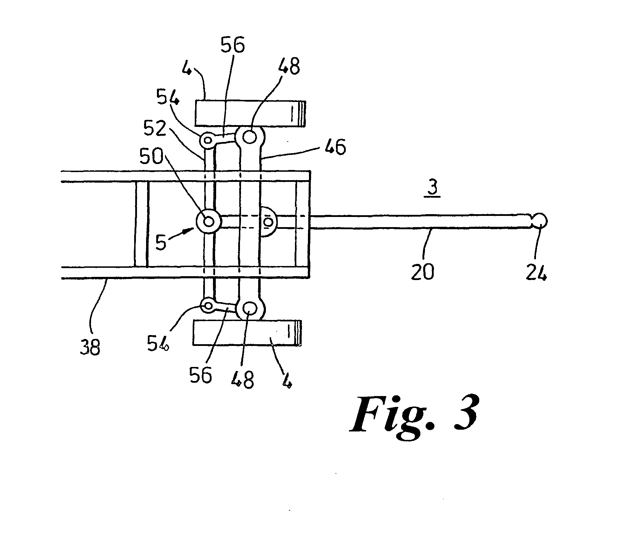

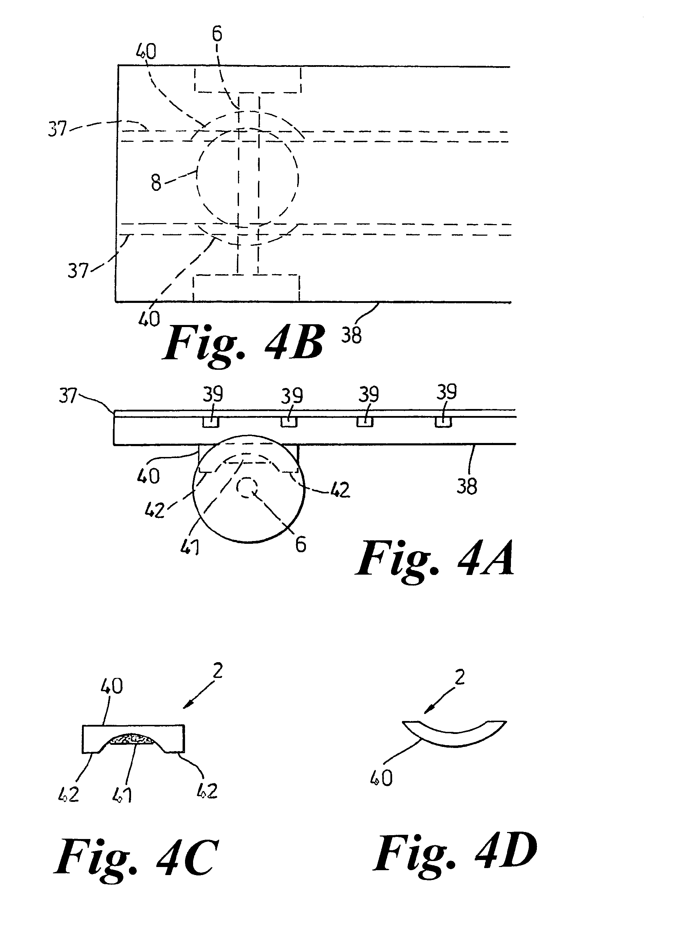

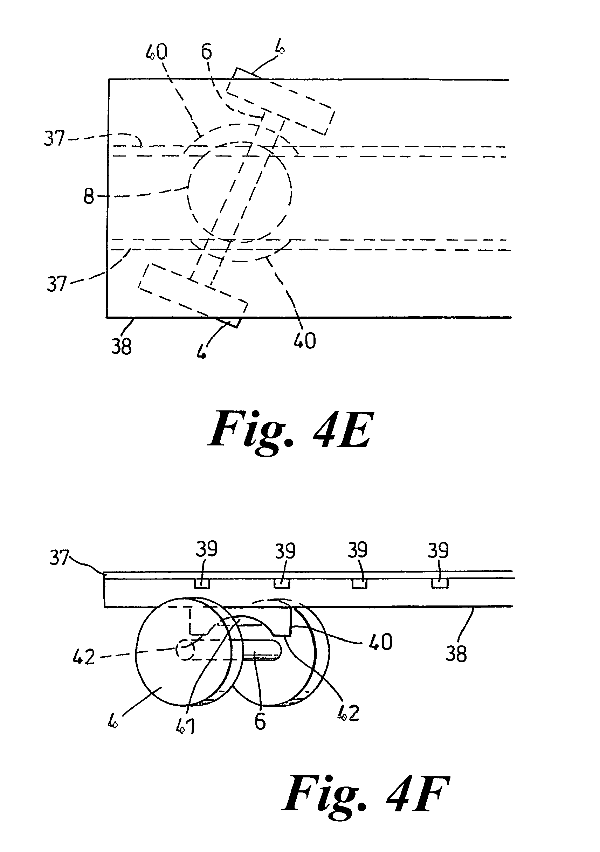

We turn now to Figure 3 which illustrates part of a third preferred embodiment of a trailer coupling apparatus 2 of the invention. This embodiment is similar to that shown in Figures 1 and 1A, and like numerals represent like components. The means to enable differential pivoting of the trailer in the embodiment shown in Figure 3 comprises a steering bar 20 which in this case is not connected to a turntable, but to kingpins 48 which allow pivoting of front left and right wheels 4. The steering bar 20 includes at the distal end thereof a steering ball 24 which is arranged to co-operate with the slide channel identically to that of Figures 1 and 1A. The other end of the steering bar 20 comprises a pivot 5 which is connected to a secondary steer bar having at either end thereof secondary pivots 54 on which are mounted kingpin connection bars 56. The embodiment shown in Figure 4 works the same way as those of the embodiments of Figures 1, 1F and 3 except that when the towing vehicle is turned to the left or right, corresponding pivoting of the steering bar 20 is achieved about pivot point 50, which causes pivoting to lateral movement of the secondary steering bar 52, which in turn causes pivoting of the kingpin connection bars 56 to pivot the kingpins 48 and thus pivot the front left and right wheels 4.

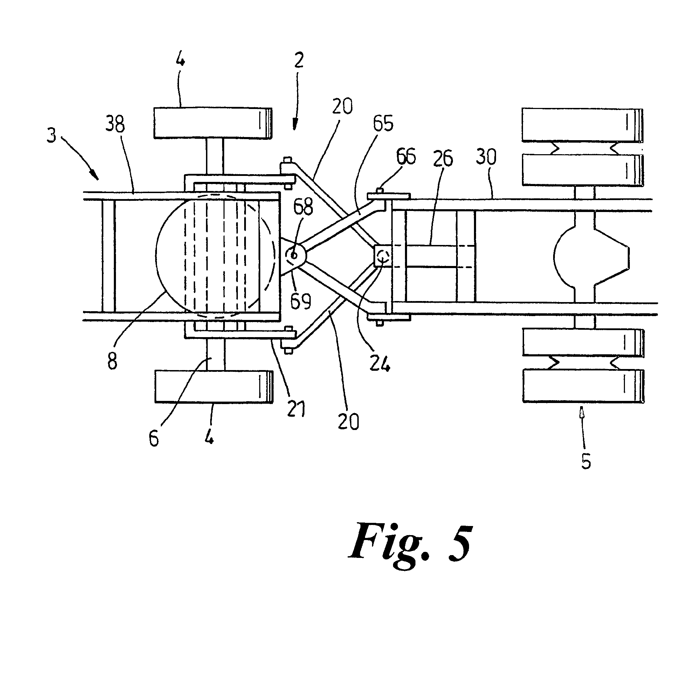

We turn now to Figures 4A to 4F. The coupling apparatus 2 of the embodiment shown in Figures 1, 1A, and 3, or any other embodiments in which a rotatable turntable are used, may include a secondary restriction means in the form of buffer members 40, as shown in Figures 4A to 4F, which in use are arranged adjacent to the turntable 8. The buffers 40 comprise partial toroid shapes, which include pendent portions 42, arranged to depend either side of the axle 6 of the coupling apparatus 2 of the invention shown in Figures 1, 1A and 3. The buffer members 40 also include a compressible material 41 between the pendent members 42, and which is arranged directly above the axle 6 when the axle 6 is perpendicular to the trailer chassis 38 during forward movement of the trailer 3. Thus in use, as the trailer 3 moves forward, the axle 6 may, through any suitable suspension, move up and down with respect the trailer chassis 38, and if for example the trailer 3 goes over a large bump, the axle 6 may abut and compress the compressible material 41 of the buffers 40 in order to prevent damage to the axle 6 or chassis 38. During turning of the trailer 3, as the wheels 4 are pivoted about turntable 8, the distal regions of the axle 6 move adjacent and under the pendent portions 42 of the buffer members 40. In this position, as shown in Figures 5e and 5f, the axle 6 is restricted in its upward movement due to the lower pendency of the pendent 42 compared to the centre region of the buffer member 40 which comprises the compressible material 41. Thus upward movement of the axle 6 is restricted during turning of the trailer and wheels 4 at low speeds. When travelling at low speed, full upward movement of the axle 6 on the trailer 3, is not needed and when the trailer front axle turns enough to move underneath the pendent portions 42, the upward movement of the axle 6 is limited by said portions. The buffer members 40 are attached to the chassis 38, rather than the steering frame 21 of the apparatus 2. Alternatively the buffer members 40 may be mounted on the axle 6 itself rather than chassis 38 of the trailer 3.

This layout allows the trailer front wheels 4 to be placed between two cross-members 39 on the trailer 3, and thus allows a lower body height than could otherwise be obtained.

We turn now to Figure 5 which illustrates another preferred embodiment of a trailer coupling apparatus 2 of the invention which is similar to the coupling apparatus 2 of Figures 1 and 1A. Like numerals represent like components. In this embodiment, a tow bar 65 is included which is hingedly connected to the chassis 30 of towing vehicle 5 rather than the chassis 38 of the trailer 3, via hinges 66 at the ends of the legs of the A-frame of the tow bar 65. The apex of the A-frame comprises a pivot bar 68 which is arranged to connect to a pivot aperture 69 on the chassis of the trailer 3. Use of the embodiment shown in Figure 5 of the coupling apparatus is essentially the same as use described in Figures 1 and 1A. The coupling apparatus 2 shown in Figure 5 is particularly suited to towing vehicles with a short rear overhang.

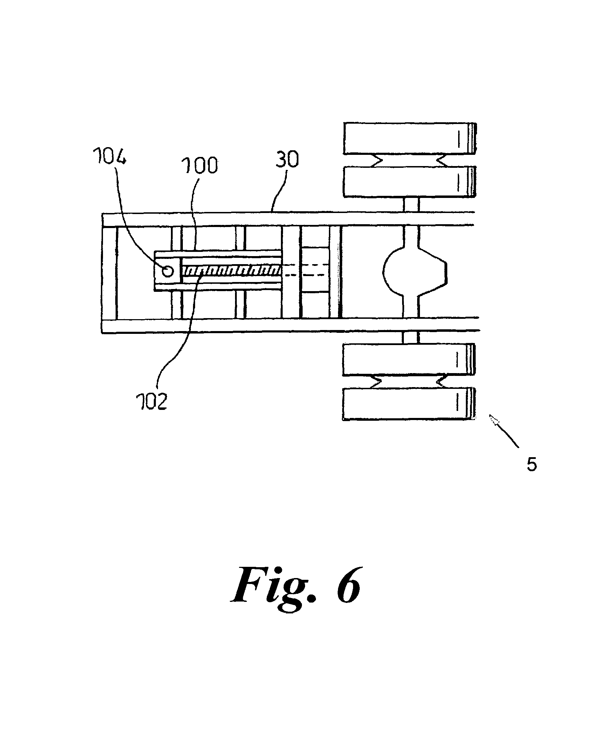

We refer next to Figure 6 which illustrates a tow bar connection member 100 which may form part of a trailer coupling apparatus 2 according to the invention. The tow bar connector 100 is rigidly connected to the towing vehicle chassis 30 and includes a telescopic member 102, which may be adjusted to slidably move a tow bar connection pivot 104, to which is connectable a tow bar 12 as described from any of the preceding embodiments or any other embodiments of the invention. The telescopic tow bar connector 100 can be used if it is desired to increase or decrease the distance between the trailer 3 and towing vehicle 5 when the two are coupled together. Thus if it is desired to create a shorter distance between the front of the trailer 3 and the rear of the towing vehicle 5, the telescopic member 102 may be manipulated to slide the connection pivot 104 towards the front of the towing vehicle 5, in order to bring forward the tow bar 12 towards the rear of the towing vehicle 5, and reduce the distance between the two vehicles. The telescopic member 102 of the tow bar connection member 100 may be provided by a motor which can be operated by air, electricity of hydraulic means for example. The telescopic section 102 may comprise a rotatable member, which rotates around a screw thread in order to move the member 100 backwards and forwards as required. The motor can be activated by sensors (not shown) which can detect the angle of the steering bar or towing bar of the towing vehicle, or by detecting the distance of the trailer from the towing vehicle.

An alternative way to give more clearance between the towing vehicle and trailer, in further embodiments (not shown) when turning, is to raise the front of the trailer and/or lower the rear of the trailer by its suspension activated by sensors which detect the trailer moving to an angle to the towing vehicle, thus tilting the trailer away from the towing vehicle.

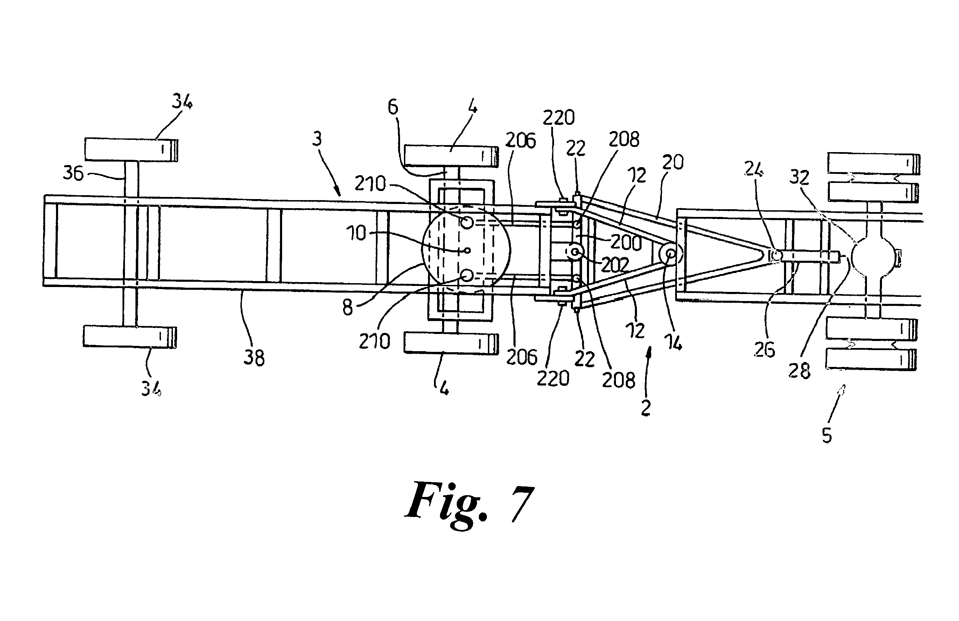

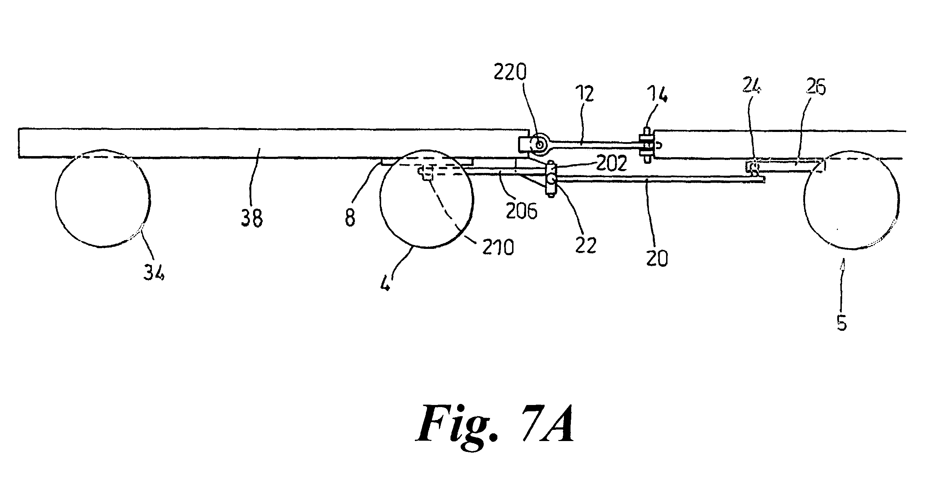

We refer now to Figures 7 and 7A which illustrate a ninth embodiment of the trailer coupling apparatus of the invention, coupled to a trailer 3 and a lorry 5. The coupling apparatus 2 is similar to the coupling apparatus shown in Figures 1 and 1A. Like numerals represent like components.

The coupling apparatus 2 includes a means to pivotally connect the trailer 3 to a towing vehicle 5 in the form of an "A-frame" tow bar 12 which at the distal end of the legs of the "A" are connected to the trailer chassis 38 via hinges 220. The apex of the A-frame 12 is connected to the towing vehicle 5 by way of a pivot 14 opererably connectable to a pivot bar on the towing vehicle 5. The trailer coupling apparatus 2 further comprises means to effect differential pivoting of the trailer wheels 4 and trailer 3 with respect to the lorry 5, as the towing vehicle is turned in use, in the form of a v-shaped steering bar 20, at the end of which extends a horizontal bar 200 pivotally connected to the bar 20 about pivots 22. The bar 200 is rotatably connected to the chassis 38 of the trailer 3 via a pivot 202. The steering bar 20 is oriented such that it can be pivoted about the pivot 202 such that the apex of the steering bar 20 is rotated in the plane of the chassis 38. The pivots 22 enable the v-shaped steering bar 20 to pivot perpendicularly to the plane of the chassis 38, ie such that the apex of the steering bar 20 can be raised or lowered from and to ground level. The apex of the steering bar 20 is connected to a slide channel 26 on the lorry 5, by way of a steering ball 24, as described for Figures 1 and 1A.

In this embodiment, the steering bar 20 also includes secondary steering bars 206, connected on the bar 200 towards either end of the bar, by pivots 208. The other ends of the secondary steering bars 206 are connected to a turntable 10 or sub-frame on the trailer, at points 210. The turntable, as described in Figures 1 and 1A, is fixedly connected to the sub-frame and front wheels for the trailer 3.

The towing bar 12 operates in an identical manner to that described in the description for Figures 1 and 1A. The steering ball 24 of the steering bar 20 co-operates with the slide tube 26 on the lorry 5 chassis in an identical manner to that described for Figures 1 and 1A. In order to provide more effective means to enable differential pivoting of the chassis 38 and wheels 4 of the trailer, the trailer coupling apparatus 2 includes secondary steering bars 206 which, when the steering bar 20 pivots about pivot 202 during turning of the lorry 5, enable secondary steering by pivoting about points 208, in order to enable tighter turning of the wheels for the trailer 3 if desired. The apparatus described for Figures 7 and 7A is particularly suitable for towing vehicle and trailer combinations in which the trailer and/or towing vehicle are relatively elongated, and therefore may have trouble turning about roundabouts or other tight turns.

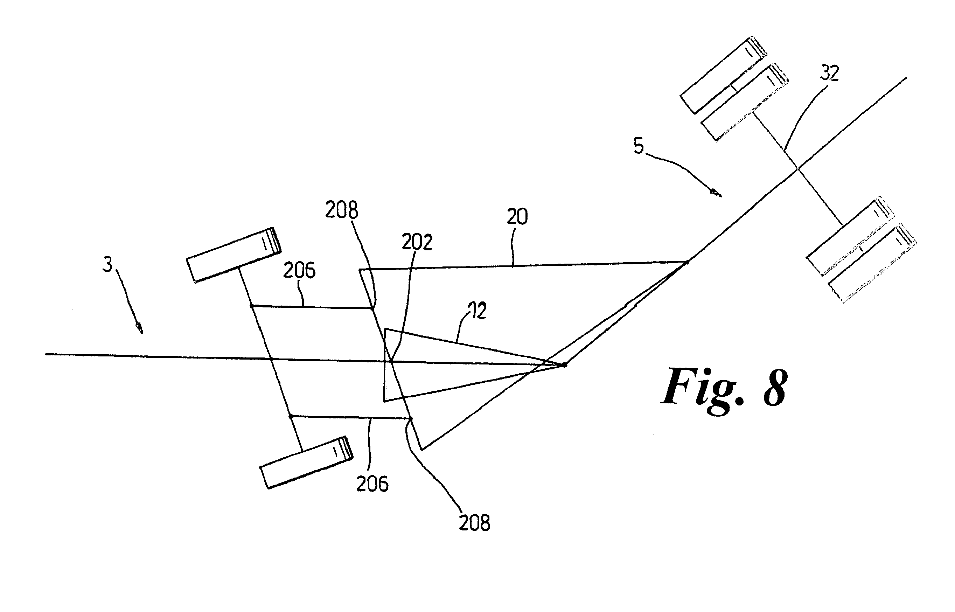

Figure 8 illustrates a schematic plan view of the trailer coupling apparatus 2 described for Figure 7 and 7A with the trailer at an angle to the towing vehicle. It can be seen that the steering bar 20 pivots laterally on the pivot 202. This movement is translated to the trailer turntable or sub-frame by the secondary steering bars 206.

Although the invention is especially useful for commercial and industrial vehicles including lorries, trailers, flat back trailers, vans etc, the invention may well apply to couplings for model vehicles, toys and other miniature versions of coupled vehicles. For example, a miniature version of the coupling apparatus may be utilised to couple a toy trailer to a toy towing vehicle. The trailer coupling apparatus may be useful in die cast models and the like.

## Claims

1. A trailer coupling apparatus (2) comprising means (6, 8) to pivotably mount at least one left wheel (4) and at least one right wheel (4) to a trailer (3), independent means (12) to pivotably connect the trailer to a towing vehicle (5) and means (20) to enable differential pivoting of the said wheels and trailer, with respect to the towing vehicle, as the towing vehicle is turned in use, comprising restriction means (24, 26), arranged in use to reduce the magnitude of pivoting of the wheels (4) with respect to the trailer (3) upon turning of an attached towing vehicle, compared to the magnitude of pivoting of the wheels (4) with respect to the trailer (3) when no restriction means are present, **characterised in that** the restriction means (24, 26) comprises a steering bar (20) having a proximal end connected to the means to pivotably mount the wheels of the trailer coupling apparatus, and a distal end, the steering bar further comprising a connection ball (24) protruding laterally from, or in the region of, the distal end, the restriction means (24, 26) further comprising a channel member (26), arranged in use to be mounted on a towing vehicle (5) parallel with or at an incline with respect to the chassis (30) of the towing vehicle (5) and trailer, and wherein the connection ball (24) is arranged in use to be movably mounted within the channel member (26) of the restriction means.

2. A trailer coupling apparatus (2) as claimed in Claim 1 wherein the trailer (3) comprises a trailer chassis (38) to which is mounted a fixed set of wheels (4) and wherein the trailer coupling apparatus (1) comprises a set of wheels (34) being pivotably mountable to the trailer (3).

3. A trailer coupling apparatus (2) as claimed in Claim 2 wherein the pivotable wheels (4) of the apparatus are connected to an axle (6) which is mounted on a pivotable member (8).

4. A trailer coupling apparatus (2) as claimed in Claim 1 or 2 wherein the pivotable wheels (4) are connected to pivotable kingpins (48).

5. A trailer coupling apparatus (2) as claimed in any preceding claim wherein the means (12) to pivotably connect the trailer to a towing vehicle comprises a means to bias the connection means onto the towing vehicle in use.

6. A trailer coupling apparatus (2) as claimed in any preceding claim wherein the means to pivotably connect the trailer to a towing vehicle comprises a tow bar (12).

7. A trailer coupling apparatus (2) as claimed in Claim 6 wherein the tow bar (12) comprises a female or male member at the distal end thereof, arranged in use to co-operate with the corresponding male or female member on the towing vehicle.

8. A trailer coupling apparatus (2) as claimed in Claim 6 or 7 wherein the tow bar (12) comprises means to prevent the distal end of the tow bar from falling to ground level when it is not coupled to a towing vehicle.

9. A trailer coupling apparatus (2) as claimed in any preceding claim wherein the pivotable wheels (4) are arranged to pivot in the turning direction of the towing vehicle (5), in use.

10. A trailer coupling apparatus (2) as claimed in any preceding claim wherein the restriction means (24, 26) effects restriction of pivoting of the pivotable wheels (4) of the trailer (3) to a fraction of the angle effected between the trailer (3) and the towing vehicle (5) chassis (30) upon turning/pivoting of a towing vehicle (5) to which the trailer (3) is connected, in use.

11. A trailer coupling apparatus (2) as claimed in any preceding claim wherein the restriction means (24, 26) enables movement of the pivotable wheels (4) of the trailer (3) in the direction the towing vehicle (5) turns, in use, and effects a restricted angle of turning of the pivotable wheels (4) in relation to the turning arc of the towing vehicle (5).

12. A trailer coupling apparatus (2) as claimed in any one of Claims 10 to 12 wherein the restriction means (24, 26) comprises means to enable substantially optimal orientation of the pivotable wheels of the trailer, in relation to the orientation of the towing vehicle, in use, as the towing vehicle is turned.

13. A trailer coupling apparatus (2) as claimed in any preceding claim wherein the restriction means (24, 26) comprises a telescopic member.

14. A trailer coupling apparatus (2) as claimed in any preceding claim wherein the apparatus (2) comprises secondary restriction means (40, 41, 42), which in use, are connectable to the trailer and which restrict upward and downward movement of the pivotable wheels (4) during turning of the trailer.

15. A trailer coupling apparatus (2) as claimed in Claim 14 wherein the secondary restriction means (40, 41, 42) comprise one or more buffers (41) co-operable with each pivotable wheel (4) and which are arranged to protrude towards the ground from the trailer adjacent to the trailer's front wheel axle (6) or axles.

16. A trailer (3) comprising at least one pivotable front left and right wheel (4) and a trailer coupling apparatus (2) of any one of Claims 1 to 15.

17. A method of connecting a trailer (3) to a towing vehicle (5), comprising the steps of:
(a) providing a trailer (3), towing vehicle (5) and a trailer coupling apparatus (2) of any one of Claims 1 to 15;
(b) connecting the trailer coupling apparatus (2) to the trailer (3); and
(c) coupling the trailer (3) to the towing vehicle (5) via the trailer coupling apparatus (2).

## Patentansprüche

1. Anhängerkupplungsvorrichtung (2), aufweisend Einrichtungen (6, 8), um schwenkbar mindestens ein linkes Rad (4) und mindestens ein rechtes Rad (4) an einem Anhänger (3) zu befestigen, eine Schleppeinrichtung (12), um schwenkbar den Anhänger an einem Schleppfahrzeug (5) zu verbinden, und eine Einrichtung (20), um ein unterschiedliches Schwenken der Räder und des Anhängers, in Bezug auf das Zugfahrzeug, zu ermöglichen, wenn das Zugfahrzeug in Benutzung seine Richtung ändert, mit Begrenzungseinrichtungen (24, 26), die in Benutzung so angeordnet sind, um die Größe eines Schwenkens der Räder (4) in Bezug auf den Anhänger (3) beim Ändern der Richtung eines verbundenen Zugfahrzeugs, verglichen mit der Größe eines Schwenkens der Räder (4) in Bezug auf den Anhänger (3), wenn keine Begrenzungseinrichtungen vorhanden sind, zu verringern, **dadurch gekennzeichnet; dass** die Begrenzungseinrichtungen (24, 26) eine Lenkdeichsel (20) aufweisen, die ein nahe liegendes Ende besitzt, das mit den Einrichtungen verbunden ist, um schwenkbar die Räder der Anhängerkupplungsvorrichtung zu befestigen, und ein entferntes Ende besitzt, wobei die Lenkdeichsel weiterhin eine Verbindungskugel (24) aufweist, die seitlich von dem entfernten Ende, oder in dem Bereich davon, vorsteht, wobei die Begrenzungseinrichtungen (24, 26) weiterhin ein Kanalelement (26) aufweisen, das, in Benutzung, so angeordnet ist, dass es an einem Zugfahrzeug (5) parallel zu dem Chassis (30) des Zugfahrzeugs (5) und des Trailers oder unter einer Neigung dazu angebracht ist, und wobei die Verbindungskugel (24), in Benutzung, so angeordnet ist, dass sie innerhalb des Kanalelements (26) der Begrenzungseinrichtungen bewegbar befestigt werden kann.

2. Anhängerkupplungsvorrichtung (2) nach Anspruch 1, wobei der Anhänger (3) ein Anhängerchassis (38) aufweist, an dem ein feststehender Satz Räder (4) befestigt ist, und wobei die Anhängerkupplungsvorrichtung (1) einen Satz Räder (34), der schwenkbar an dem Anhänger (3) befestigbar ist, aufweist.

3. Anhängerkupplungsvorrichtung (2) nach Anspruch 2, wobei die schwenkbaren Räder (4) der Vorrichtung mit einer Achse (6) verbunden sind, die an einem schwenkbaren Element (8) befestigt ist.

4. Anhängerkupplungsvorrichtung (2) nach Anspruch 1 oder 2, wobei die schwenkbaren Räder (4) mit schwenkbaren Achsschenkelbolzen (48) verbunden sind.

5. Anhängerkupplungsvorrichtung (2) nach einem vorhergehenden Anspruch, wobei die Einrichtung (12), um schwenkbar den Anhänger mit einem Zugfahrzeug zu verbinden, eine Einrichtung aufweist, um die Verbindungseinrichtungen, in Benutzung, zu dem Zugfahrzeug hin vorzuspannen.

6. Anhängerkupplungsvorrichtung (2) nach einem vorhergehenden Anspruch, wobei die Einrichtung, um schwenkbar den Anhänger mit einem Zugfahrzeug zu verbinden, eine Schleppstange (12) aufweist.

7. Anhängerkupplungsvorrichtung (2) nach Anspruch 6, wobei die Schleppstange (12) ein negatives (female) oder positives (male) Element an dem entfernten Ende davon aufweist, das in Benutzung so angeordnet ist, um mit dem entsprechenden positiven oder negativen Element an dem Zugfahrzeug zusammenzuwirken.

8. Anhängerkupplungsvorrichtung (2) nach Anspruch 6 oder 7, wobei die Schleppstange (12) Einrichtungen aufweist, um zu verhindern, dass das entfernte Ende der Schleppstange auf das Bodenniveau herunterfällt, wenn es nicht mit einem Zugfahrzeug verbunden ist.

9. Anhängerkupplungsvorrichtung (2) nach einem vorhergehenden Anspruch, wobei die schwenkbaren Räder (4) so angeordnet sind, um sich in der Drehrichtung des Zugfahrzeugs (5), in Benutzung, zu schwenken.

10. Anhängerkupplungsvorrichtung (2) nach einem vorhergehenden Anspruch, wobei die Begrenzungseinrichtungen (24, 26) eine Begrenzung eines Schwenkens der schwenkbaren Räder (4) des Anhängers (3) auf einen Teil des Winkels bewirken, der zwischen dem Anhänger (3) und dem Chassis (30) des Zugfahrzeugs (5)-unter einem Drehen/Schwenken eines Zugfahrzeugs (5), an dem der Anhänger (3) verbunden ist, in Benutzung, gebildet wird.

11. Anhängerkupplungsvorrichtung (2) nach einem vorhergehenden Anspruch, wobei die Begrenzungseinrichtungen (24, 26) eine Bewegung der schwenkbaren Räder (4) des Anhängers (3) in der Richtung, in der das Zugfahrzeug (5) seine Richtung ändert, ermöglichen und einen begrenzten Drehwinkel der Schwenkräder (4) in Bezug auf den Drehbogen des Zugfahrzeugs (5) bewirken.

12. Anhängerkupplungsvorrichtung (2) nach einem der Ansprüche 10 oder 11, wobei die Begrenzungseinrichtungen (24, 26) Einrichtungen aufweisen, um eine im Wesentlichen optimale Orientierung der schwenkbaren Räder des Anhängers, in Bezug auf die Orientierung des Zugfahrzeugs, in Benutzung, wenn das Zugfahrzeug seine Richtung ändert, zu ermöglichen.

13. Anhängerkupplungsvorrichtung (2) nach einem vorhergehenden Anspruch, wobei die Begrenzungseinrichtungen (24, 26) ein Teleskopelement aufweisen.

14. Anhängerkupplungsvorrichtung (2) nach einem vorhergehenden Anspruch, wobei die Vorrichtung (2) sekundäre Begrenzungseinrichtungen (40, 41, 42) aufweist, die, in Benutzung, mit dem Anhänger verbindbar sind, und die eine Bewegung nach oben und nach unten der schwenkbaren Räder (4) während einer Richtungsänderung des Anhängers begrenzen.

15. Anhängerkupplungsvorrichtung (2) nach Anspruch 14, wobei die sekundären Begrenzungseinrichtungen (40, 41, 42) einen oder mehrere Puffer (41) aufweisen, die mit jedem schwenkbaren Rad (4) zusammenwirken und die so angeordnet sind, um zu dem Boden von dem Anhänger, benachbart zu der Vorderradachse (6) oder den Achsen des Anhängers, vorzustehen.

16. Anhänger (3), der mindestens ein schwenkbares vorderes linkes und rechtes Rad (4) und eine Anhängerkupplungsvorrichtung (2) nach einem der Ansprüche 1 bis 15 aufweist.

17. Verfahren zum Verbinden eines Anhängers (3) mit einem Zugfahrzeug (5), das die Schritte aufweist:
(a) Bereitstellen eines Anhängers (3), eines Zugfahrzeugs (5) und einer Anhängerkupplungsvorrichtung (2) nach irgendeinem der Ansprüche 1 bis 15;
(b) Verbinden der Anhängerkupplungsvorrichtung (2) mit dem Anhänger (3); und
(c) Verbinden des Anhängers (3) mit dem Zugfahrzeug (5) über die Anhängerkupplungsvorrichtung (2).

## Revendications

1. Dispositif d'attelage de remorque (2) comprenant des moyens (6, 8) pour monter pivotantes au moins une roue gauche (4) et au moins une roue droite (4) sur une remorque (3), des moyens (12) indépendants pour connecter pivotante la remorque à un véhicule remorqueur (5) et des moyens (20) pour permettre le pivotement différentiel desdites roues et de la remorque par rapport au véhicule remorqueur lorsque celui-ci effectue un virage, comprenant des moyens de limitation (24, 26) destinés, à l'état d'utilisation, à réduire l'amplitude de pivotement des roues (4) par rapport à la remorque (3) lors du virage d'un véhicule remorqueur auquel celle-ci est attachée, comparé à l'amplitude de pivotement des roues (4) par rapport à la remorque (3) lorsqu'aucun moyen de limitation n'est prévu, **caractérisé en ce que** les moyens de limitation (24, 26) comprennent une barre de guidage (20) ayant une extrémité proximale, connectée aux moyens permettant de monter pivotantes les roues du dispositif d'attelage de remorque, et une extrémité distale, la barre de guidage comprenant en outre une rotule de connexion (24) faisant saillie latéralement depuis ou dans la zone de l'extremité distale, les moyens de limitation (24, 26) comprenant en outre un élément en forme de canal (26) conçu pour être monté, à l'état d'utilisation, sur un véhicule remorqueur (5) parallèlement ou selon un plan incliné par rapport au châssis (30) du véhicule remorqueur (5) et de la remorque, et dans lesquels la rotule de connexion (24) est conçue, à l'état d'utilisation, pour être montée mobile dans l'élément en forme de canal (26) des moyens de limitation.

2. Dispositif d'attelage de remorque (2) tel que défini dans la Revendication 1, dans lequel la remorque (3) comprend un châssis de remorque (38) sur lequel est monté un ensemble fixé de roues (4), et dans lequel le dispositif d'attelage de remorque (1) comprend un ensemble de roues (34) pouvant être montées pivotantes sur la remorque (3).

3. Dispositif d'attelage de remorque (2) tel que défini dans la Revendication 2, dans lequel les roues pivotantes (4) du dispositif sont connectées à un essieu (6) qui est monté sur un élément pivotant (8).

4. Dispositif d'attelage de remorque (2) tel que défini dans la Revendication 1 ou 2, dans lequel les roues pivotantes (4) sont connectées à des chevilles pivotantes (48).

5. Dispositif d'attelage de remorque (2) tel que défini dans l'une quelconque des revendications précédentes, dans lequel les moyens (12) permettant de connecter pivotante la remorque à un véhicule remorqueur comprennent des moyens pour solliciter, à l'état d'utilisation, les moyens de connexion sur le véhicule remorqueur.

6. Dispositif d'attelage de remorque (2) tel que défini dans l'une quelconque des revendications précédentes, dans lequel les moyens permettant de connecter pivotante la remorque à un véhicule remorqueur comprennent un barre de remorquage (12).

7. Dispositif d'attelage de remorque (2) tel que défini dans la Revendication 6, dans lequel la barre de remorquage (12) comprend, à son extrémité distale, un élément femelle ou mâle conçu pour coopérer, à l'état d'utilisation, avec l'élément mâle ou femelle correspondant, présent sur le véhicule remorqueur.

8. Dispositif d'attelage de remorque (2) tel que défini dans la Revendication 6 ou 7, dans lequel la barre de remorquage (12) comprend des moyens pour empêcher que son extrémité distale ne tombe au niveau du sol lorsqu'elle n'est pas attelée à un véhicule remorqueur.

9. Dispositif d'attelage de remorque (2) tel que défini dans l'une quelconque des revendications précédentes, dans lequel les roues pivotantes (4) sont agencées de façon à pivoter, à l'état d'utilisation, dans le sens de virage du véhicule remorqueur (5).

10. Dispositif d'attelage de remorque (2) tel que défini dans l'une quelconque des revendications précédentes, dans lequel les moyens de limitation (24, 26) assurent une limitation du pivotement des roues pivotantes (4) de la remorque (3) à une fraction de l'angle produit entre la remorque (3) et le châssis (30) du véhicule remorqueur (5) lors du virage/pivotement d'un véhicule remorqueur (5) auquel est connectée la remorque (3) à l'état d'utilisation.

11. Dispositif d'attelage de remorque (2) tel que défini dans l'une quelconque des revendications précédentes, dans lequel les moyens de limitation (24, 26) permettent, à l'état d'utilisation, un mouvement des roues pivotantes (4) de la remorque (3) dans le sens de virage du véhicule remorqueur (5), et assurent un angle de limitation de rotation des roues pivotantes (4) par rapport à l'arc de virage du véhicule remorqueur (5).

12. Dispositif d'attelage de remorque (2) tel que défini dans l'une quelconque des Revendications 10 à 12, dans lequel les moyens de limitation (24, 26) comprennent des moyens permettant, à l'état d'utilisation, une orientation sensiblement optimale des roues pivotantes de la remorque par rapport à l'orientation du véhicule remorqueur lorsque celui-ci effectue un virage.

13. Dispositif d'attelage de remorque (2) tel que défini dans l'une quelconque des revendications précédentes, dans lequel les moyens de limitation (24, 26) comprennent un élément télescopique.

14. Dispositif d'attelage de remorque (2) tel que défini dans l'une quelconque des revendications précédentes, dans lequel le dispositif (2) comprend des moyens de limitation secondaires (40, 41, 42) qui, à l'état d'utilisation, peuvent être connectés à la remorque et qui limitent le déplacement vers le haut et vers le bas des roues pivotantes (4) lors du virage de la remorque.

15. Dispositif d'attelage de remorque (2) tel que défini dans la Revendication 14, dans lequel les moyens de limitation secondaires (40, 41, 42) comprennent un ou plusieurs amortisseurs (41) coopérant avec chaque roue pivotante (4) et agencés de façon à faire saillie en direction du sol, depuis la remorque, de manière adjacente à l'essieu (6) des roues avant de la remorque ou aux essieux.

16. Remorque (3) comprenant au moins une roue avant pivotante (4) gauche et droite et un dispositif d'attelage de remorque (2) selon l'une quelconque des Revendications 1 à 15.

17. Procédé pour connecter une remorque (3) à un véhicule remorqueur (5), comprenant les étapes consistant à :
(a) prévoir une remorque (3), un véhicule remorqueur (5) et un dispositif d'attelage de remorque (2) selon l'une quelconque des Revendications 1 à 15 ;
(b) connecter le dispositif d'attelage de remorque (2) à la remorque (3) ; et
(c) atteler la remorque (3) au véhicule remorqueur (5) via le dispositif d'attelage de remorque (2).
